# EUROPEAN PATENT SPECIFICATION

(11) **EP 2 808 261 B1**
(45) Date of publication and mention of the grant of the patent: **29.08.2018**
(21) Application number: 13169318.6
(22) Date of filing: 27.05.2013
(51) Int. Cl.: B64F 1/20

(54) **Airfield lighting system**
Flugplatzbeleuchtungssystem
Système d'éclairage d'aérodrome

(43) Date of publication of application: 03.12.2014
(73) Proprietor: Induperm A/S, 4800 Nykøbing Falster (DK)
(72) Inventor: Schönert, Oliver, 59597 Arnsberg (DE)
(74) Representative: Jöstingmeier, Martin

(56) References cited:
- WO-A1-2011/134984
- GB-A- 164 436
- GB-A- 2 337 645

## Description

### Field of the invention

The present patent application relates to high intensity airfield lighting system, e. g. a runway edge lighting system or a taxiway lighting system, comprising a main body, a dome securable to the main body, wherein the dome is designed for light transmission and at least partially transparent, at least one light unit covered by the dome and comprising at least one first lighting element fixed to a carrier of the light unit, at least one first optical element designed to receive light from the first lighting element and to emit the light received in a main light-exit direction, and a support for the at least one first optical element, and a heat sink for dissipating heat generated by the first lighting element.

GB 164 436 A discloses a high intensity airfield lighting system with the main body and a dome secured to the main body. A first light unit is covered by the dome and fixed to a carrier. A reflector as a first optical element is used to emit the light received from the first light unit into a main light-exit direction. Furthermore a second light unit and a second optical element are provided. Light of the second light unit is emitted circular within a horizontal light-exit plane.

In WO 2011/134984 A1 an airfield lighting system is disclosed which comprises a main body built to carry two light units on opposite sides of the body. Each light unit comprises at least one lighting element, a circuit broad for the lighting element and a heat sink built for dissipating heat generated by the light elements. The airfield lighting device is built to emit light in two opposite light-exit directions and utilizes light emitting diodes as light sources. It can be used as airfield runway edge, and, threshold and approach lighting system. Due to light emitting into two well defined light-exit directions the lighting system is not suitable for use as an omnidirectional airfield lighting system.

### Summary of the invention

The problem to be solved in this invention is to provide an airfield lighting system which can be used to emit light in well-defined light-exit direction and as an omnidirectional airfield lighting system. The lighting system should be built as modular lighting system in order to realize either one of the lighting functions but both of them.

In order to solve the problem the lighting system is characterized in that the lighting system comprises:
- a heat sink for dissipating heat generated by the first lighting element; and the heat sink comprises a first heat sink section carrying the at least one light unit and a second heat sink section carrying the electronic circuit.
The inventive lighting system has a very compact design which allows the realization of two different lighting functions. First, light emitted by the first lighting elements passes through the first optical elements and is emitted in a main light-exit direction allowing the lighting system to be used as runway edge lighting system, taxiway lighting system or the like. Second, light of the second lighting element is emitted into a light-exit plane allowing the lighting system to be used as omnidirectional lighting system as well. As one or both of the lighting functions can be realized within the lighting system it provides high degree of flexibility with respect to the field of application of the lighting system. The lighting system is built for the use of modern high power light emitting diodes. The heat sink provided dissipates heat generated by the lighting elements of the light unit.
In a preferred embodiment of the invention the at least one second lighting element is fixed to the heat sink and/or to the carrier of the light unit. Fixing the second lighting element to the heat sink allows sufficient heat dissipation. The heat sink used to dissipate heat generated by the first lighting element can also be used to dissipate heat generated by the second lighting element. Fixing the second lighting element of the carrier of the light unit allows a compact architecture of the light unit and makes assembly easy and fast. E. g. the carrier assembly could be done within a single production step as well as mounting of the assembled carrier to the heat sink. Moreover, the effort for wiring the lighting elements is reduced.

According to the invention an electronic circuit for powering and driving the first lighting element and/or the second lighting element is provided and mounted to the heat sink in such a way that heat generated by the electronic circuit is dissipated by the heat sink. Therefore, the heat sink is used to dissipate heat generated by both the lighting elements and the electronic circuit. This reduces cost and allows for an additional reduction of the size of the lighting system.
The heat sink comprises of a first heat sink section carrying the light unit and a second heat sink section carrying the electronic circuit. By providing a heat sink with at least two heat sink sections each section can be individually designed with respect to the requirements of the light unit and the electronic circuit. E. g. the dissipating capacity of each heat sink section can be adjusted to the heat generated by the electronic circuit or the lighting elements.
According to a further embodiment of the invention the at least one second lighting element is in an elevated position with respect to the at least one first lighting element within an upright position of the lighting system. E. g. the second lighting element can be mounted on the top of the heat sink with the first lighting element been mounted underneath the second lighting element. The elevate position of the second lighting element allows good optical conditions for the omnidirectional lighting function while the position of the first lighting elements has no negative effect on the light emission in the main light-exit direction. Therefore, both lighting functions can be realized within one lighting system.
In an operating position of the lighting system the first heat sink section has a vertical orientation with the two opposed installation surfaces being arranged symmetrical to a vertical center axis of the first heat sink section while the second heat sink section is orientated horizontally. The electronic circuit is mounted to a bottom side of the horizontally orientated second heat sink section. The first heat sink section might be built as a wedge-shaped heat sink section with the second lighting element being mounted on two different sides of the tip of the wedge-shaped heat sink section and with the installation surfaces for the light units being built on two plain surfaces of the wedge. The wedge-shaped first heat sink section makes it easy to emit the light of the first lighting element to the main light-exit direction which is in an upgrade position with respect to the light-exit plane of the second lighting elements.

At least two second lighting elements and corresponding second optical elements can be provided and arranged in such a way that light emitted by the second lighting elements and passed through the second optical elements completely is emitted into the light-exit plane. Advantageously the omnidirectional lighting function can be provided with as few as two second lighting elements which are in elevated position to the heat sink and/or the first lighting elements. The vertical distance of the second lighting elements should be small to allow good illumination of the light-exit plane. E. g. the vertical distance should be 5.0 cm or less, preferred 3.5 cm or less.

According to a further embodiment of the invention the main body is part of the heat sink. The integrative of the main body into the heat sink improves heat dissipation. E. g. the main body may provide cooling fins or the like to enlarge the outside surface. Moreover, a heat sink comprising the main body as well as the first heat sink section and the second heat sink section can be built as a single solid body in a cost efficient way, e. g. by casting.

According to a further embodiment of the invention the lighting system comprises a drainpipe and a hollow in the bottom section of the heat sink for draining off entrapped moisture. The drainpipe can be built as a siphon-shaped drainpipe. Providing the hollow and/or the drainpipe allows protection of the electronic circuit from getting into contact with moisture or the like. The electronic circuit may be built as a sealed electronic circuit in order to provide even better protection from moisture input. Therefore, the lighting system has a moisture proof design with high reliability and improved durability. Even if the dome is damaged and water from outside can enter the lighting system failures can be prevented.

Moreover, a heater can be provides which is integrated into the electronic circuit in order to allow reliable function even at cold temperature and rough environmental conditions. The heater heats the heat sink in order to defreeze the functional components of the lighting system, e. g. the light units and the dome.

Further advantages of this invention are disclosed in the subclaims.

### Brief description of the drawings

The present invention will become more fully understood from the detailed description given hereinbelow and the accompanying drawings which are given by way of illustration only, and thus, are not limitive to the present invention.

In the drawings:
- Fig. 1: shows a first embodiment of the inventive lighting system;
- Fig. 2: shows an exploded view of the lighting system of fig. 1;
- Fig. 3: shows an exploded view of a light unit of the lighting system of fig. 1;
- Fig. 4: shows a section of view of the lighting system of fig. 1;
- Fig. 5: shows a detailed view on a hollow and a drainpipe of the lighting system of fig. 1;
- Fig. 6: shows a cross-sectional view on the lighting system of fig. 1; and

### Detailed description of the drawings

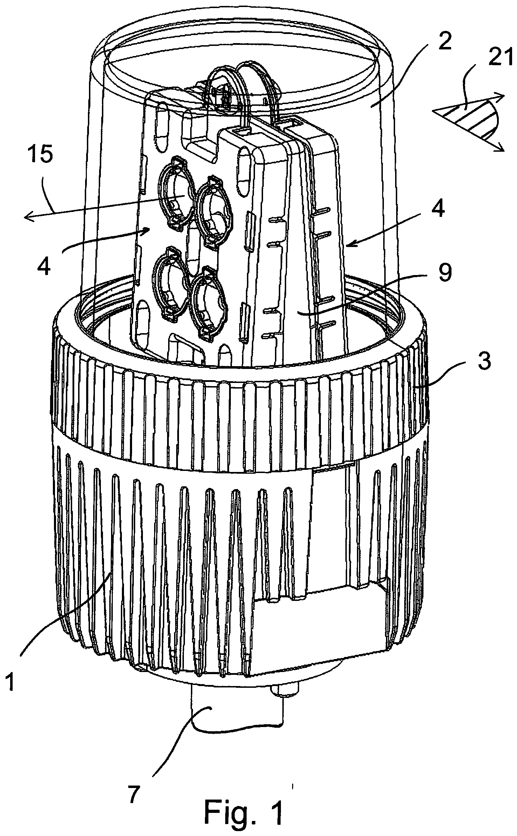

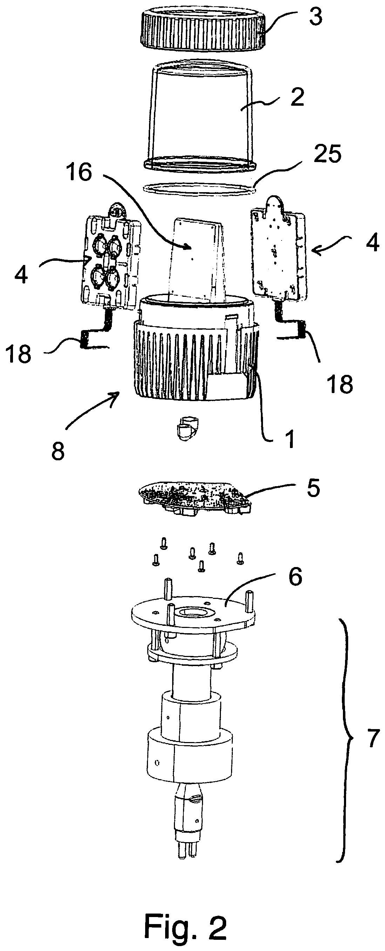

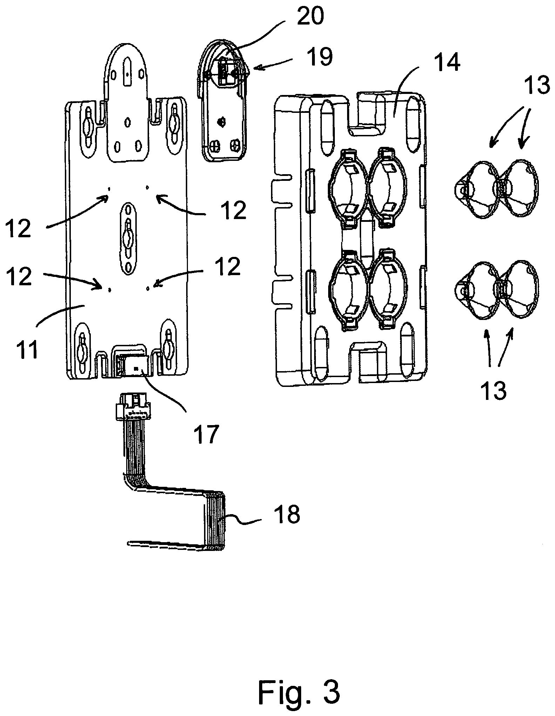

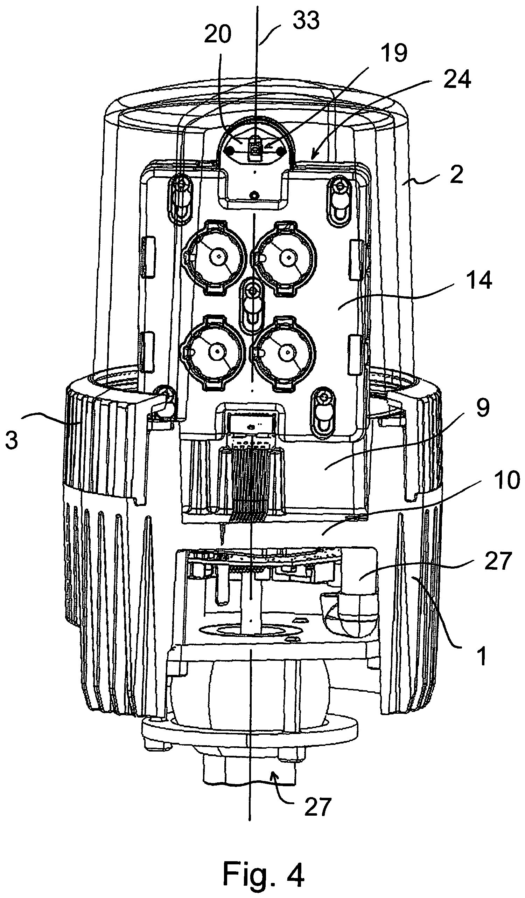

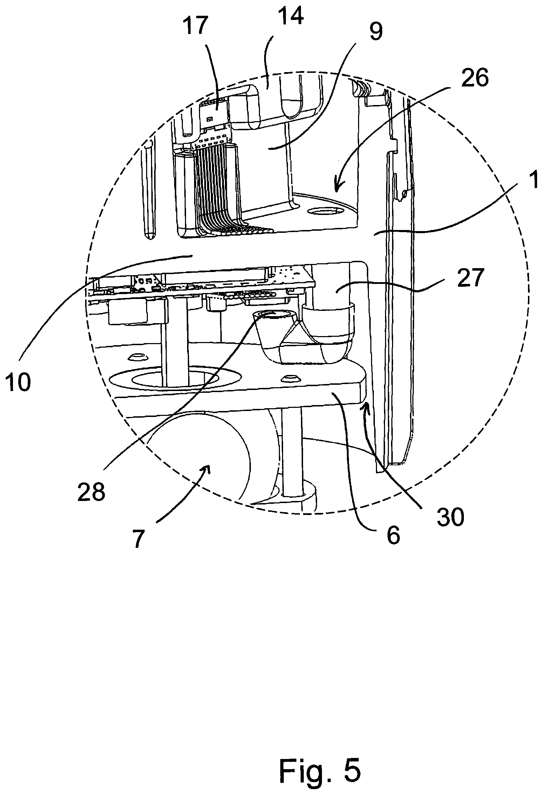

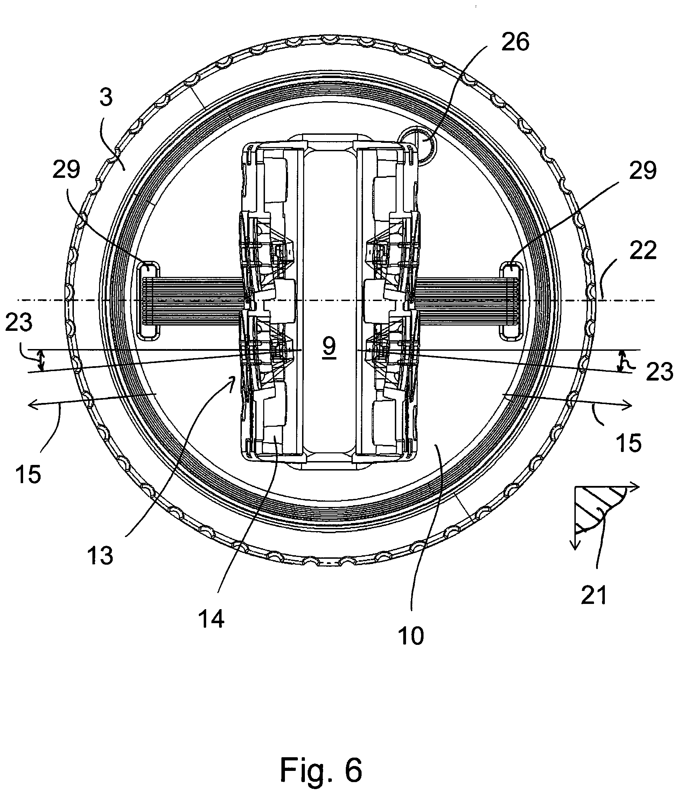

A first embodiment of the inventive lighting system is shown in the fig. 1 to 6. The main components of the lighting system are a main body 1, a dome 2, a fixing ring 3, two light units 4, an electronic circuit 5, an adapter plate 6 and a socket 7. The main body 1 is part of the heat sink 8 which also consists of a first heat sink section 9 carrying the two light units 4 and a second heat sink section 10 carrying the electronic circuit 5.

Each light unit 4 comprises a carrier 11 carrying four light emitting diodes as first lighting elements 12, four first optical elements 13 and a support 14 for the first optical elements 13. The first lighting elements 12 are mounted to the carrier 11 of the light unit 4. The support 14 is also fixed to the carrier 11. The first optical elements 13 are arranged in such a way that light emitted by the first lighting elements 12 is received by the first optical elements 13 and emitted by the first optical elements 13 in a main light-exit direction 15 after passing the first optical elements 13.

The lighting units 4 are fixed to the first heat sink section 9 which is in a central position with respect to the main body 1 of the heat sink 8 and covered by the dome 2. The first heat sink section 9 is designed as a wedge-shaped heat-sink section 9 carrying the light units 4. With respect to the light units 4 two opposed plain surfaces of the wedge-shaped heat sink section 9 define two installation surfaces 16 which are in plain contact with the carrier 11 of the lighting units 4.

The carrier 11 also holds a connector plug 17 for connecting the light emitting diodes 12 and the electronic circuit 5 via cable 18.

Heat generated by the light units 4 is dissipated by the heat sink 8. Moreover, the heat sink 8 dissipates heat generated by the electronic circuit 5.

A second lighting element 19 and a second optical element 20 assigned to the second lighting element 19 is also fixed to the carrier 11. Light emitted by the second lighting element is received by the second optical element 20 and emitted primarily into a light-exit plane 21 which has horizontal orientation with the lighting system being in an vertical operating position. Light refracted by the second lighting element 19 allows the lighting system to realize an omnidirectional lighting function. A vertically spreading angle of the light emitted by the second optical element basically varies between -1° and +16° with respect to the light-exit plane with a small portion of the light being emitted upwards. The horizontal spreading angle of the second optical element 20 varies from -95° to +95° with respect to a horizontal center axis 22 of the lighting system.

In order to emit light into the whole light-exit plane 21 two second lighting elements 19 are provided on two opposed sides of the wedge-shaped first heat sink section 9. The second lighting elements 19 are located close to the tip 24 of the wedge-shaped heat sink section 9 and in an elevated position with respect to the tip 24 of the wedge-shaped heat sink section 9 and the first lighting elements 12 allowing the light emission without interference with the light units 4 or the heat sink 8. A horizontal distance of the two lighting elements 19 is less than 3.5 cm.

With the two light units 4 and the two second lighting elements 19 the lighting system provides two light functions. The light units 4 emit light into the main light-exit direction 15. The second lighting elements 19 emit light into the light-exit plane 21 allowing an omnidirectional lighting function to be realized. Depending on individual requirements on the airfield the modular design of the lighting systems allows to include both lighting functions or either one of them. Moreover, the main light-exit direction 15 can vary depending on the design of the light units 4. By changing the support 14 of the light unit 4 an angle 23 between the main light-exit direction 15 and the horizontal center axis 22 of the lighting system can be adopted. Typical light-exit angles 23 are 0°, 3.5° and 4.5°. The angles 23 are realized by varying the orientation of the first optical elements 13 within the support 14. Therefore, the main light-exit direction 15 can be chosen by changing the support 14 of the light unit 4 while all other elements (e. g. carrier 11, first lighting element 12, first optical element 13, and connector plug 17) remain unchanged.

The dome 2 of the lighting system can be made of plastic or glass. It is at least partially transparent and allows light emitted by the lighting elements 12, 19 to pass through. It is realized without lenses or other optical elements.

The fixing ring 3 can be locked to the main body 1 without a tool. The fixing ring 3 and the main body 1 are connected by bayonet means. In order to avoid moisture draining into the lighting system a sealing 25 is provided between the main body 1 and the dome 2.

The electronic circuit 5 is fixed to the second heat sink section 10 which has a mainly horizontal orientation. The electronic circuit 5 is mounted to a bottom side of the section heat sink section 10. The cable 18 connecting the light units 4 and the electronic circuit 5 passes through a slot 29 in the second heat sink section 10. The electronic circuit 5 is sealed with the sealing not been shown in the fig. 1 to 6.

Due to the rough environmental conditions on an airfield the ingress of moisture cannot be avoided completely. E. g. the dome can be damaged. Therefore, the mainly horizontal orientated second heat sink section 10 provides a hollow 26 allowing water to pass through. In order to make sure that water passing the hollow 26 does not damage the electronic circuit 5 a drainpipe 27 is provided. The drainpipe 27 is connected to the hollow 26. It is realized as a siphon-type drainpipe 27 with an opening 28 in an upward orientation facing the electronic circuit 5. If moisture enters the lighting system due to damages of the dome 2 or the like it passes through the hollow 26 and enters the drainpipe 27 without getting into contact to the electronic circuit 5.

The adapter plate 6 is designed to connect the heat sink 8 with a socket 7. The design of the adapter plate 6 allows water passing through the drainpipe 27 to exit the lighting system via an annular gap 30 built between the main body 1 and the adapter plate 6. Moreover, the adapter plate 6 allows the socket 7 to be connected to different types of main bodies 1 or heat sinks 8.

The optical elements 13, 20 are realized as lenses in an alternative embodiment of the invention which is not shown in the figures. Any other suitable refracting or reflecting optics could also be used to realize the optical elements 13, 20.

The light units 4 are realized as modular light units which are changeably mounted to the heat sink 8.

### List of reference numbers

- 1: main body
- 2: dome
- 3: fixing ring
- 4: light unit
- 5: electronic circuit
- 6: adapter plate
- 7: socket
- 8: heat sink
- 9: first heat sink section
- 10: second heat sink section
- 11: carrier
- 12: first lighting element
- 13: first optical element
- 14: support
- 15: main light-exit direction
- 16: installation surface
- 17: connector plug
- 18: cable
- 19: second lighting element
- 20: second optical element
- 21: light-exit plane
- 22: horizontal center axis
- 23: angle
- 24: tip
- 25: sealing
- 26: hollow
- 27: drainpipe
- 28: opening
- 29: slot
- 30: annular gap
- 31:
- 32:
- 33: vertical center axis
- 34:
- 35:

## Claims

1. High intensity airfield lighting system comprising
- a main body (1);
- a dome (2) securable to the main body (1), wherein the dome (2) is designed for light transmission and at least partially transparent;
- at least one light unit (4) covered by the dome (2) and comprising at least one first lighting element (12) fixed to a carrier (11) of the light unit (4), at least one first optical element (13) designed to receive light from the first lighting element (12) and to emit the light received into a main light-exit direction (15), and a support (14) for the at least one first optical element (13);
- a heat sink (8) for dissipating heat generated by the first lighting element (12);
wherein at least one second lighting element (19) and at least one second optical element (20) are provided with the second optical element (20) receiving the light of the second lighting element (19) and emitting the light received at least semicircular within a light-exit plane (21), **characterized in that** the heat sink (8) comprises a first heat sink section (9) carrying the at least one light unit (4) and a second heat sink section (10) carrying an electronic circuit (5).

2. Lighting system of claim 1 **characterized in that** the at least one second lighting element (19) is mounted to the heat sink (8) and/or to the carrier (11) of the light unit (4).

3. Lighting system of one of the claims 1 to 2 **characterized in that** an electronic circuit (5) for powering and driving the first lighting element (12) and/or the second lighting element (19) is provided and mounted to the heat sink (8) in such a way that heat generated by the electronic circuit (5) is dissipated by the heat sink (8).

4. Lighting system of one of the claims 1 to 3 **characterized in that** at least two light units (4) are provided with the two light units (4) being mounted to two opposed installation surfaces (16) of the heat sink (8).

5. Lighting system of one of the claims 1 to 4 **characterized in that** in an operating position of the lighting system
- the light-exit plane (21) is in a horizontal orientation; and/or
- an angle (23) less than 25° is built between the light-exit plane (21) and the main light-exit direction (15); and/or
- the at least one second lighting element (19) is in an elevated position with respect to the at least one first lighting element (12); and/or
- the first heat sink section (9) is in a mainly vertical orientation with the two opposed installation surfaces (16) being arranged symmetrically to a vertically extended center axis of the first heat sink section (9); and/or
- the second heat sink section (10) is in a mainly horizontal orientation with the electronic circuit (5) being mounted to a bottom side of the second heat sink section (10).

6. Lighting system of one of the claims 1 to 5 **characterized in that** at least two second lighting elements (19) and at least two second optical elements (20) are provided which are arranged in such a way that the light emitted by the second lighting elements (19) and passed through the second optical elements (20) completely illuminates the light-exit plane (21).

7. Lighting system of one of the claims 1 to 6 **characterized in that** a hollow (26) in the second heat sink section (10) and a drainpipe (17) connected to the hollow (26) are provided for draining off entrapped moisture.

8. Lighting system of claim 7 **characterized in that** the drainpipe (27) is a siphon-shaped drainpipe (27).

9. Lighting system of one of the claims 1 to 8 **characterized in that** the first optical element (13) is formed as a refracting optical element (13) and/or that the second optical element (20) is formed as a refracting optical element (20) or as a reflecting optical element (20).

10. Lighting system of one of the claims 1 to 9 **characterized in that** the vertically oriented first heat sink section (9) is built as a wedge-shaped heat sink section (9)
- with the at least two second lighting elements (19) being mounted on two different sides of the tip of the wedge-shaped heat sink section (9); and/or
- with the at least two second lighting elements (19) being in an elevated position with respect to the tip of the wedge-shaped heat sink (8); and/or
- with the two installation surfaces (16) being built as plain surfaces of the wedge.

## Patentansprüche

1. Leuchtstarkes Flugfeld-Beleuchtungssystem, umfassend
- einen Hauptkörper (1);
- eine Kuppel (2), die an dem Hauptkörper (1) befestigbar ist, wobei die Kuppel (2) zur Lichtübertragung ausgelegt und zumindest teilweise transparent ist;
- mindestens eine Leuchteinheit (4), die von der Kuppel (2) bedeckt ist und die mindestens ein an einem Träger (11) der Leuchteinheit (4) befestigtes erstes Leuchtelement (12), mindestens ein erstes optischen Element (13), das zum Empfangen von Licht von dem ersten Leuchtelement (12) und zum Emittieren des empfangenen Lichts in eine Haupt-Lichtaustrittsrichtung (15) ausgebildet ist, und einen Träger (14) für das wenigstens eine erste optische Element (13) aufweist;
- einen Kühlkörper (8) zum Ableiten von Wärme, die von dem ersten Leuchtelement (12) erzeugt wird;
wobei mindestens ein zweites Leuchtelement (19) und mindestens ein zweites optisches Element (20) vorgesehen sind, wobei das zweite optische Element (20) das Licht des zweiten Leuchtelements (19) empfängt und das empfangene Licht zumindest halbkreisförmig innerhalb einer Lichtaustrittsebene (21) emittiert,
**dadurch gekennzeichnet, dass**
der Kühlkörper (8) einen ersten Kühlkörperabschnitt (9), der mindestens eine Leuchteinheit (4) trägt, und einen zweiten Kühlkörperabschnitt (10), der eine elektronische Schaltung (5) trägt, aufweist.

2. Beleuchtungssystem nach Anspruch 1,
**dadurch gekennzeichnet, dass**
das mindestens eine zweite Leuchtelement (19) an dem Kühlkörper (8) und/oder am Träger (11) der Leuchteinheit (4) befestigt ist.

3. Beleuchtungssystem nach einem der Ansprüche 1 bis 2,
**dadurch gekennzeichnet, dass**
eine elektronische Schaltung (5) zur Stromversorgung und zum Betreiben des ersten Leuchtelements (12) und/oder des zweiten Leuchtelements (19) bereitgestellt ist und an dem Kühlkörper (8) derart befestigt ist, dass die von der elektronischen Schaltung (5) erzeugte Wärme von dem Kühlkörper (8) abgeleitet wird.

4. Beleuchtungssystem nach einem der Ansprüche 1 bis 3,
**dadurch gekennzeichnet, dass**
mindestens zwei Leuchteinheiten (4) bereitgestellt sind, wobei die beiden Leuchteinheiten (4) an zwei gegenüberliegende Montageflächen (16) dem Kühlkörper (8) befestigt sind.

5. Beleuchtungssystem nach einem der Ansprüche 1 bis 4,
**dadurch gekennzeichnet, dass**
in einer Betriebsposition des Beleuchtungssystems
- die Lichtaustrittsebene (21) in einer horizontalen Ausrichtung ist; und/oder
- zwischen der Lichtaustrittsebene (21) und der Haupt-Lichtaustrittsrichtung (15) ein Winkel (23) von weniger als 25° gebildet wird; und/oder
- das mindestens eine zweite Leuchtelement (19) in einer erhöhten Position in Bezug auf das mindestens eine erste Leuchtelement (12) ist; und/oder
- der erste Kühlkörperabschnitt (9) in einer hauptsächlich vertikalen Ausrichtung ist, wobei die beiden gegenüberliegenden Montageflächen (16) symmetrisch zu einer vertikal verlängerten Mittelachse des ersten Kühlkörperabschnitts (9) angeordnet sind; und/oder
- der zweite Kühlkörperabschnitt (10) in einer hauptsächlich horizontalen Ausrichtung ist, wobei die elektronische Schaltung (5) an einer Unterseite des zweiten Kühlkörperabschnitts (10) angebracht ist.

6. Beleuchtungssystem nach einem der Ansprüche 1 bis 5,
**dadurch gekennzeichnet, dass**
mindestens zwei zweite Leuchtelemente (19) und mindestens zwei zweite optische Elemente (20) bereitgestellt sind, welche derart angeordnet sind, dass das von den zweiten Leuchtelementen (19) emittierte und durch die zweiten optischen Elemente (20) geleitete Licht vollständig die Lichtaustrittsebene (21) beleuchtet.

7. Beleuchtungssystem nach einem der Ansprüche 1 bis 6,
**dadurch gekennzeichnet, dass**
ein Hohlraum (26) im zweiten Kühlkörperabschnitt (10) und ein mit dem Hohlraum (26) verbundenes Abflussrohr (17) zum Ableiten von eingeschlossener Feuchtigkeit vorgesehen sind.

8. Beleuchtungssystem nach Anspruch 7,
**dadurch gekennzeichnet, dass**
das Abflussrohr (27) ein siphonförmiges Abflussrohr (27) ist.

9. Beleuchtungssystem nach einem der Ansprüche 1 bis 8,
**dadurch gekennzeichnet, dass**
das erste optische Element (13) als lichtbrechendes optisches Element (13) ausgebildet ist und/oder dass das zweite optische Element (20) als lichtbrechendes optisches Element (20) oder als reflektierendes optisches Element (20) ausgebildet ist.

10. Beleuchtungssystem nach einem der Ansprüche 1 bis 9,
**dadurch gekennzeichnet, dass**
der vertikal ausgerichtete erste Kühlkörperabschnitt (9) als keilförmiger Kühlkörperabschnitt (9) ausgebildet ist,
- wobei die mindestens zwei zweiten Leuchtelemente (19) auf zwei verschiedenen Seiten der Spitze des keilförmigen Kühlkörperabschnitts (9) angebracht sind; und/oder
- wobei sich die mindestens zwei zweiten Leuchtelemente (19) in einer erhöhten Position in Bezug auf die Spitze des keilförmigen Kühlkörpers (8) befinden; und/oder
- wobei die zwei Montageflächen (16) als ebene Flächen des Keils ausgebildet sind.

## Revendications

1. Système d'éclairage aéroportuaire à haute intensité comprenant :
- un corps principal (1) ;
- un dôme (2) pouvant être fixé au corps principal (1), le dôme (2) étant conçu pour transmettre la lumière et étant au moins partiellement transparent ;
- au moins une unité lumineuse (4) recouverte par le dôme (2) et comprenant au moins un premier élément d'éclairage (12) fixé sur un support (11) de l'unité lumineuse (4), au moins un premier élément optique (13) conçu pour recevoir la lumière du premier élément d'éclairage (12) et pour émettre la lumière reçue dans une direction principale de sortie de lumière (15), et un support (14) pour ledit au moins un premier élément optique (13) ;
- un dissipateur thermique (8) pour dissiper la chaleur générée par le premier élément d'éclairage (12) ;
dans lequel au moins un deuxième élément d'éclairage (19) et au moins un deuxième élément optique (20) sont prévus, le deuxième élément optique (20) recevant la lumière du deuxième élément d'éclairage (19) et émettant la lumière reçue au moins en demi-cercle dans un plan de sortie de lumière (21), **caractérisé en ce que** le dissipateur thermique (8) comprend une première partie de dissipateur thermique (9) portant ladite au moins une unité lumineuse (4) et une deuxième partie de dissipateur thermique (10) portant un circuit électronique (5).

2. Système d'éclairage selon la revendication 1, **caractérisé en ce que** ledit au moins un deuxième élément d'éclairage (19) est monté sur le dissipateur thermique (8) et/ou sur le support (11) de l'unité lumineuse (4).

3. Système d'éclairage selon l'une des revendications 1 à 2, **caractérisé en ce qu'**un circuit électronique (5) pour alimenter et piloter le premier élément d'éclairage (12) et/ou le deuxième élément d'éclairage (19) est prévu et monté sur le dissipateur thermique (8) de telle sorte que la chaleur générée par le circuit électronique (5) est dissipée par le dissipateur thermique (8).

4. Système d'éclairage selon l'une des revendications 1 à 3, **caractérisé en ce qu'**au moins deux unités lumineuses (4) sont prévues, les deux unités lumineuses (4) étant montées sur deux surfaces d'installation opposées (16) du dissipateur thermique (8).

5. Système d'éclairage selon l'une des revendications 1 à 4, **caractérisé en ce que** dans une position de fonctionnement du système d'éclairage
- le plan de sortie de lumière (21) est dans une orientation horizontale ; et/ou
- un angle (23) inférieur à 25° est formé entre le plan de sortie de lumière (21) et la direction principale de sortie de lumière (15) ; et/ou
- ledit au moins un deuxième élément d'éclairage (19) est dans une position surélevée par rapport audit au moins un premier élément d'éclairage (12) ; et/ou
- la première partie de dissipateur thermique (9) est dans une orientation principalement verticale, les deux surfaces d'installation opposées (16) étant disposées symétriquement par rapport à un axe central s'étendant verticalement de la première partie de dissipateur thermique (9) ; et/ou
- la deuxième partie de dissipateur thermique (10) est dans une orientation principalement horizontale, le circuit électronique (5) étant monté sur un côté inférieur de la deuxième partie de dissipateur thermique (10).

6. Système d'éclairage selon l'une des revendications 1 à 5, **caractérisé en ce qu'**il est prévu au moins deux deuxièmes éléments d'éclairage (19) et au moins deux deuxièmes éléments optiques (20) qui sont disposés de telle sorte que la lumière émise par les deuxièmes éléments d'éclairage (19) et qui traverse les deuxièmes éléments optiques (20) éclaire complètement le plan de sortie de lumière (21).

7. Système d'éclairage selon l'une des revendications 1 à 6, **caractérisé en ce qu'**il est prévu une cavité (26) dans la deuxième partie de dissipateur thermique (10) et un tuyau d'écoulement (17) relié à la cavité (26) pour évacuer l'humidité piégée.

8. Système d'éclairage selon la revendication 7, **caractérisé en ce que** le tuyau d'écoulement (27) est un tuyau d'écoulement en forme de siphon (27).

9. Système d'éclairage selon l'une des revendications 1 à 8, **caractérisé en ce que** le premier élément optique (13) est formé comme élément optique réfractant (13) et/ou que le deuxième élément optique (20) est formé comme élément optique réfractant (20) ou comme élément optique réfléchissant (20).

10. Système d'éclairage selon l'une des revendications 1 à 9, **caractérisé en ce que** la première partie de dissipateur thermique (9) orientée verticalement est réalisée sous la forme d'une partie de dissipateur thermique (9) en forme de coin
- lesdits au moins deux deuxièmes éléments d'éclairage (19) étant montés sur deux côtés différents de la pointe de la partie de dissipateur thermique (9) en forme de coin ; et/ou
- lesdits au moins deux deuxièmes éléments d'éclairage (19) étant dans une position surélevée par rapport à la pointe du dissipateur thermique (8) en forme de coin ; et/ou
- les deux surfaces d'installation (16) étant construites comme des surfaces planes du coin.
